# EUROPÄISCHE PATENTANMELDUNG

(11) **EP 1 536 301 A2**
(43) Veröffentlichungstag der Anmeldung: **01.06.2005**
(21) Anmeldenummer: 04090407.0
(22) Anmeldetag: 22.10.2004
(51) Int. Cl.: G05B 9/00, H04L 12/00

(54) **Zweikanalige Einheit mit eingangsseitigen digitalen Meldestufen oder ausgangsseitigen digitalen Kommandostufen**

(30) Priorität: 25.11.2003 DE 10355863
(71) Anmelder: SIEMENS AKTIENGESELLSCHAFT, 80333 München (DE)
(72) Erfinder: Weiberg, Bernd, 38448 Wolfsburg (DE)

(57) **Zusammenfassung**

Die Erfindung betrifft eine Zweikanalige Einheit (1) mit eingangsseitigen digitalen Meldestufen (MS0-MS7) für eine im sicheren Betrieb betriebene sicherungstechnische Einrichtung, mit zwei von einem übergeordneten sicheren Rechner steuerbaren Controllern (2a, 2b), die jeweils mit einem Eingang (4) und einem Ausgang (3) der zweikanalig vorhandenen Meldestufen (MS0-MS7) verbunden sind, mit einer Prüfschaltung (5), welche zur Prüfung der Meldestufen (MS0-MS7) von den Controllern (2a, 2b) gesteuert alle Eingänge der Meldestufen (MS0-MS7) auf einen definierten Zustand setzt, wobei anschließend von den beiden Controllern (2a, 2b) simulierte Eingangssignale auf die Eingänge (4) gegeben und die so bewirkten Ausgangssignale erfasst und dem übergeordneten Rechner zur Verfügung gestellt werden, wobei die Controller (2a, 2b) und der Rechner über voneinander getrennte unabhängige serielle Busse (6) miteinander kommunizieren, jeder serielle Bus (6) eine Potenzialtrennung (6a) aufweist und zur Potenzialtrennung (6a)in den seriellen Bussen (6) Optokoppler verwendet werden. Um die Potentialtrennung mittels Optokopplern auch im Fehlerfall sicherzustellen, wird vorgeschlagen, dass eine Verlustleistungsbegrenzung der Optokoppler vorgesehen ist.

## Beschreibung

Die Erfindung betrifft eine zweikanalige Einheit mit eingangsseitigen digitalen Meldestufen oder ausgangsseitigen digitalen Kommandostufen gemäß den Oberbegriffen der Ansprüche 1 und 7.

Im sicheren Betrieb arbeitende sicherungstechnische Einrichtungen sind bekannt. Dabei kann es sich um Signallampen, Weichenantriebe, Achszähler, Freimeldereinrichtungen und dergleichen in der Außenanlage eines Stellwerks handeln. Die Innenanlage eines solchen Stellwerks umfasst heute einen übergeordneten sicheren Rechner, der mit einer Vielzahl von weiteren Komponenten der Innenanlage verbunden ist. Bei diesen Komponenten kann es sich um zweikanalige Einheiten entweder mit digitalen Melde- oder Kommandostufen handeln. Diese müssen aus Sicherheitsgründen bezüglich ihrer Funktionsfähigkeit zyklisch überprüft werden. Hierzu verfügt die Einheit für jeden Kanal über einen Controller, der jeweils vom sicheren Rechner steuerbar ist. Die Melde- oder Kommandostufen sind aus Sicherheitsgründen zweikanalig ausgeführt, wobei die beiden Controller jeweils mit einem Eingang und einem Ausgang der beiden Melde- bzw. Kommandostufen eines Paares verbunden sind.

Zur Prüfung der Meldestufen kann eine elektronische Prüfschaltung vorgesehen sein, die von den Controllern so gesteuert wird, dass alle Eingänge der Meldestufen auf Masse gelegt werden können. Danach werden vom Controller vorgeschriebene Bitmuster zur Simulation von digitalen Eingangssignalen auf die Eingänge der Meldestufen gegeben, die dann mit entspredie Eingänge der Meldestufen gegeben, die dann mit entsprechenden Ausgangssignalen reagieren, auf welche der übergeordnete Rechner wiederum über die Controller Zugriff hat.

Zur Prüfung der Kommandostufen kann von den Controllern jeweils ein zeitlich kurzer Impuls auf die Eingänge der Kommandostufen gegeben werden, und zwar sequentiell, d.h. zeitlich hintereinander jeweils einen Impuls auf einen Eingang. Die Impulse sind so bemessen, dass es an den Eingängen zu einer kurzzeitigen Zustandsinvertierung kommt. Die dadurch kurzzeitig geänderten Ausgangssignale werden wiederum erfasst und dem zugeordneten sicheren Rechner zur Verfügung gestellt.

Aus Sicherheitsgründen ist zwischen dem sicheren Rechner und den Melde- bzw. Kommandostufen eine Potenzialtrennung vorhanden. Bei der bekannten Einheit ist dazu jede Melde- bzw. Kommandostufe mit einer eigenen Potenzialtrennung versehen; hierzu dienen entsprechende Optokoppler.

Nachteilig bei der bekannten Einheit ist es, dass diese aufgrund der vielen Optokoppler relativ großbauend und teuer ist.

Weiter ist aus der DE 198 13 389 C2 bereits eine sicherheitsgerichtete Ansteuerschaltung mit zwei Transceivern A und B bekannt, welche die beiden Kanäle der Schaltung bilden. Am Eingang der Ansteuerschaltung sind Meldestufen in digitaler Form vorgesehen. Ein übergeordneter Master steuert zwei Stationen bzw. Controller CPU A und CPU B; diese sind jeweils mit einem Eingang und einem Ausgang der Meldestufen verbunden, welche zweikanalig ausgebildet sind. Zur Prüfung können die Eingänge der Meldestufen von den Controllern CPU A, CPU B auf einen definierten Zustand gesetzt und simulierte Eingangssignale auf die Eingänge gegeben werden. Diese so bewirkten Ausgangssignale werden durch Anwendersoftware erfasst und dem übergeordneten Master zur Verfügung gestellt. Die Controller CPU A, CPU B kommunizieren mit dem Master über voneinander getrennte und unabhängige serielle Busse. Dabei weist jeder serielle Bus eine Potentialtrennung auf, die mittels Optokopplern bewirkt wird.

Die Melde- und Kommandostufen der Ein-/Ausgangsebene sind so aufgebaut, dass sie sowohl als Ein- und Ausgänge als auch zur Anbindung weiterer serieller Bus-Systeme verwendbar sind. Auf diese Weise ermöglicht es die Verschaltung der Ein/Ausgangspaare, diese mit Hilfe von Testmustern zu prüfen sowie die Anschlüsse in definierte Zustände zu schalten. Die Melde- und Kommandostufen können folglich über ein duales, redundantes Bussystem mit einem übergeordneten sicheren Master so verbunden werden, dass alle Bezugspotentiale voneinander getrennt sind.

Bezüglich der Spannungsfestigkeit sind zwei Trennebenen vorhanden, eine im Bus am Master und die andere in den Ausgangsstufen (Ausgabestufen).

Letzteres bedeutet, dass im Fehlerfall die sichere Trennung, die hier zwingend erforderlich ist, verlorengeht.

Die Aufgabe der Erfindung ist es, die Potentialtrennung mittels Optokopplern auch im Fehlerfall sicherzustellen.

Die Lösung dieser Aufgabe wird durch die in den Ansprüchen 1 und 7 angegebenen Merkmale gegeben. Die kennzeichnenden Merkmale der Unteransprüche enthalten entsprechende vorteilhafte Ausgestaltungen.

Die Lösung sieht bezüglich der Einheit mit digitalen Meldestufen vor, dass eine Verlustleistungsbegrenzung der Optokoppler vorgesehen ist. Die Verwendung eines seriellen Busses ermöglicht hier vorteilhafterweise den Einbau der Potenzialtrennung in den Bus, was trotz einer größeren Zahl von Melde- oder Kommandostufen eine kleinbauende Ausführung ergibt, aufgrund der Einsparung von einer Vielzahl von Optokopplern, was darüber hinaus auch kostengünstig ist. Aber erst durch die Verlustleistungsbegrenzung der Optokoppler ist die Potentialtrennung auch im Fehlerfall sichergestellt. Dies wird mit einfachen Mitteln dadurch erreicht, dass die Optokoppler zur Verlustleistungsbegrenzung unterhalb der Nennbetriebsspannung betrieben werden und die Betriebsspannung über entsprechend dimensionierte Vorwiderstände an den Optokopplern anliegt.

Technisch einfach ist es, alle Eingänge auf den Zustand Null zu setzen.

Insbesondere wird die Prüfung vereinfacht, wenn die Eingänge der stromsensitiven Meldestufen auf Masse gelegt werden.

Eine einfache Sicherheitsschaltung sieht vor, dass eine vom Rechner gesteuerte Schalteinheit vorgesehen ist, welche im Fehlerfall die Versorgungsspannung der angeschlossenen Peripherie abschaltet.

Die Prüfqualität wird erhöht, wenn die auf die Eingänge gegebenen simulierten digitalen Eingangssignale vorgegebene Bitmuster sind, und zwar solche, welche sich bei der Prüfung von Meldestufen bewährt haben.

Die Lösung sieht auch bezüglich der zweikanaligen Einheit mit digitalen Kommandostufen vor, dass eine Verlustleistungsbegrenzung der Optokoppler vorgesehen ist.

Bei einer technisch einfachen Einheit wird die Zustandsinvertierung impulsartig durchgeführt, der logische Zustand der Kommandostufen wird also impulsartig verändert.

Insbesondere wird die Prüfung vereinfacht, wenn zur Verlustleistungsbegrenzung die Optokoppler unterhalb der Nennbetriebsspannung betrieben werden und die Betriebsspannung über Vorwiderstände an den Optokopplern anliegt.

Eine Sicherheitsabschaltung ist gewährleistet, wenn eine vom Rechner gesteuerte Schalteinheit vorgesehen ist, welche im Fehlerfall die Versorgungsspannung der angeschlossenen Peripherie abschaltet.

Die Erfindung nachfolgend anhand einer Zeichnung näher beschrieben. Es zeigen:
- Fig. 1: eine zweikanalige Einheit mit vier Meldestufenpaaren und
- Fig. 2: eine zweikanalige Einheit mit vier digitalen Kommandostufenpaaren.

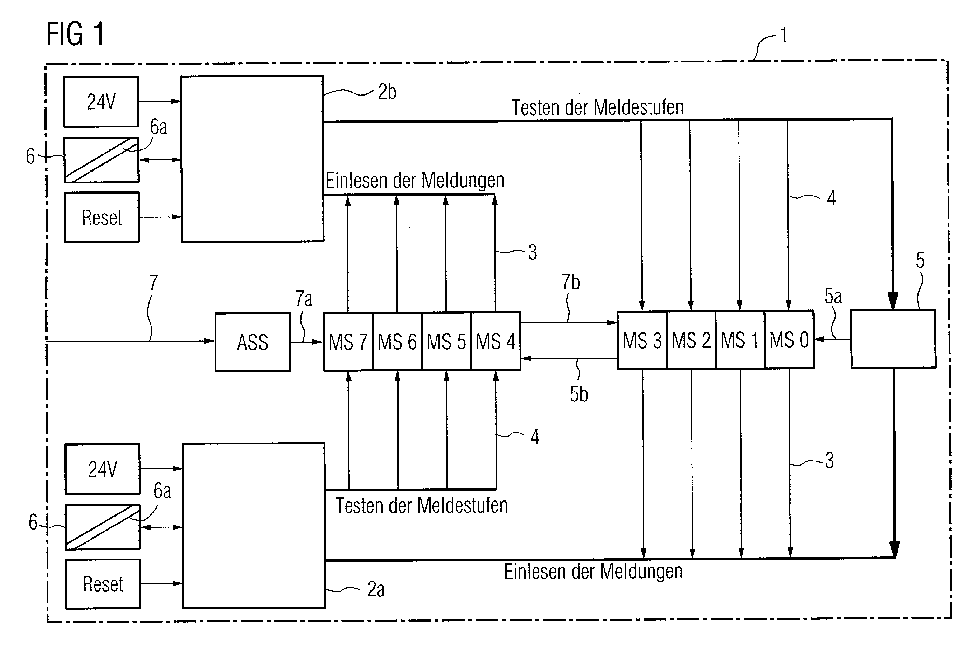

Die Fig. 1 zeigt eine zweikanalige Einheit 1 mit digitalen Meldestufen MS, die aus sicherungstechnischen Gründen als Meldestufenpaare ausgeführt sind und zu einer nicht gezeigten Prozessanschaltung für das sichere Betreiben einer sicherungstechnischen Einrichtung der Innenanlage gehören, also beispielsweise für die Ansteuerung von Signallampen, Weichenantrieben, Achszählern, Freimeldeeinrichtungen, Geschwindigkeitsmesseinrichtungen und Fahrsperren als auch für sichere Kontaktabfragen.

Eingangsseitig sind in Fig. 1 vier Meldestufenpaare MS0, MS4; MS1, MS5; MS2, MS6 und MS3, MS7 vorgesehen; die Meldestufen (MSO-MS7) sind also zweikanalig vorhandenen. Jede Meldestufe MSO-MS7 ist mit zwei Controllern 2a, 2b verbunden, jeder Controller 2a, 2b jeweils mit einem Eingang und einem Ausgang der Meldestufenpaare. An jedem Meldestufenpaar ist also der Controller 2a mit dem Eingang der einen Meldestufe MS und dem Ausgang der anderen Meldestufe MS verbunden. Dabei repräsentieren die von den Meldestufen MSO-MS7 wegführenden Pfeile 3 in Fig. 1 die Ausgänge und die hinführenden Pfeile 4 die Eingänge der Meldestufen MSO-MS7. In Fig. 1 ist der Controller 2a mit den Eingängen der Meldestufen MS4 - MS7 und den Ausgängen der Meldestufen MS0 - MS3 verbunden, umgekehrt der Controller 2b mit den Ausgängen der Meldestufen MS4 - MS7 und den Eingängen der Meldestufen MS0 - MS3.

Zur Prüfung der stromsensitiven Meldestufen MSO-MS7 dient eine Prüfschaltung 5, welche auf einen Befehl des Controllers 2b hin (Testen der Meldestufen) alle Eingänge der Meldestufen MSO-MS7 auf Masse legt (durch die Pfeile 5a, 5b ist der Durchgriff der Prüfschaltung 5 dargestellt), was eine einfache Möglichkeit ist, um die Meldestufen MSO-MS7 auf den Zustand Null zu setzen. Der Zustand Null ist einer von zwei definierten Eingangszuständen der Meldestufen MSO-MS7. Anschließend werden von den beiden Controllern 2a, 2b simulierte Eingangssignale auf die Eingänge aller acht Meldestufen MSO-MS7 gegeben (Testen der Meldestufen), und zwar als vorgegebene Bitmuster, wobei vorzugsweise solche Bitmuster verwendet werden, die sich bereits für derartige Prüfungen bewährt haben. Die Ausgangssignale der Bitmuster werden von den Controllern 2a, 2b erfasst (Einlesen der Meldungen) und stehen dem übergeordneten sicheren Rechner (nicht gezeigt) über die Controller 2 zur Verfügung.

Die Controller 2a, 2b kommunizieren mit dem Rechner über einen seriellen Bus 6, der - wie in Fig. 1 durch die beiden diagonalen Striche gekennzeichnet - eine Potenzialtrennung 6a aufweist, hier mittels zweier Optokoppler (nicht gezeigt). Dabei ist eine Verlustleistungsbegrenzung der Optokoppler vorgesehen, indem die Optokoppler unterhalb der Nennbetriebsspannung betrieben werden und die Betriebsspannung über Vorwiderstände an den Optokopplern anliegt.

Über eine Verbindung 7 ist der übergeordnete Rechner mit einer Schalteinheit ASS verbunden, welche vom sicheren Rechner direkt gesteuert die Versorgungsspannung der angeschlossenen Peripherie auf dessen Abschaltbefehl hin abschaltet (durch die Pfeile 7a, 7b ist der Durchgriff schematisch dargestellt).

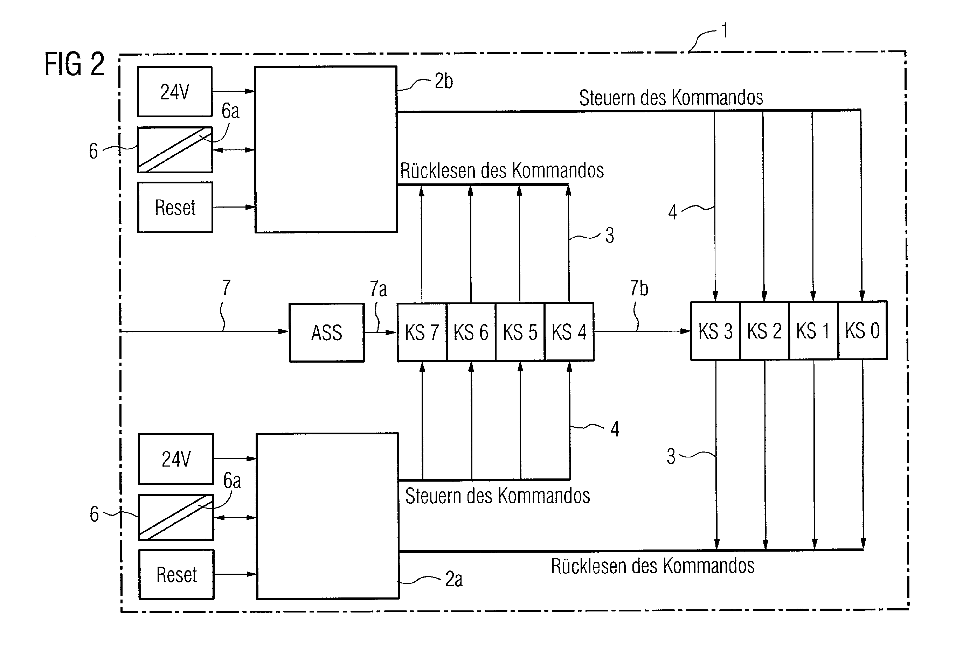

Fig. 2 zeigt eine zweikanalige Einheit mit ausgangsseitigen digitalen Kommandostufen KS anstelle der Meldestufen MS. Wie ein Vergleich von Fig. 1 und Fig. 2 sofort zeigt, ist in Fig. 2 keine Prüfschaltung 5 vorhanden, d.h. die Kommandostufen KS müssen zur Prüfung nicht vorher auf einen definierten Zustand gesetzt werden.

Zur Prüfung wird von den Controllern 2a, 2b jeweils eine Zustandsinvertierung sequentiell auf die Eingänge der Kommandostufen KS gegeben, und zwar vom Controller 2b auf die Kommandostufen KS0 - KS3 und vom Controller 2a auf die Kommandostufen KS4 - KS7, was in Fig. 2 als Steuern der Kommandos bezeichnet ist. Die Zustandsinvertierung erfolgt in Form von kurzen Impulsen, beispielsweise Spannungsimpulsen, während eines beliebigen aktuellen Zustands an jedem Eingang der Kommandostufen. Die so bewirkten Ausgangssignale (Impulssignale) werden erfasst (Rücklesen der Kommandos) und dem sicheren Rechner zur Verfügung gestellt.

Auch hier ist ein serieller Bus 6 zur Kommunikation mit den sicheren Rechner vorgesehen, der wiederum eine Potenzialtrennung 6a mittels Optokopplern aufweist. Ebenfalls ist eine Verlustleistungsbegrenzung der Optokoppler vorgesehen, indem die Optokoppler unterhalb der Nennbetriebsspannung betrieben werden und die Betriebsspannung über Vorwiderstände an den Optokopplern anliegt.

Im Bedarfsfall kann der sichere Rechner die Versorgungsspannung der angeschlossenen Peripherie, das sind alle an die Kommandostufen anschließbaren Verbraucher, beispielsweise Relais usw., über die Schalteinheit ASS abschalten, was durch die Pfeile 7a und 7b dargestellt ist, wobei die Pfeile 7a und 7b den Durchgriff der Schalteinheit ASS zeigen sollen.

### Bezugszeichenliste

- 1: zweikanalige Einheit
- 2a: Controller
- 2b: Controller
- 3: Ausgang
- 4: Eingang
- 5: Prüfschaltung
- 5a, 5b: Durchgriff der Prüfschaltung
- 6: serieller Bus
- 6a: Potenzialtrennung
- 7: Verbindung
- 7a, b: Durchgriff der ASS
- MS: digitale Meldestufe
- KS: digitale Kommandostufe
- ASS: Schalteinheit

## Patentansprüche

1. Zweikanalige Einheit (1) mit eingangsseitigen digitalen Meldestufen (MSO-MS7) für eine im sicheren Betrieb betriebene sicherungstechnische Einrichtung,
mit zwei von einem übergeordneten sicheren Rechner steuerbaren Controllern (2a, 2b), die jeweils mit einem Eingang (4) und einem Ausgang (3) der zweikanalig vorhandenen Meldestufen (MSO-MS7) verbunden sind,
mit einer Prüfschaltung (5), welche zur Prüfung der Meldestufen (MSO-MS7) von den Controllern (2a, 2b) gesteuert alle Eingänge der Meldestufen (MSO-MS7) auf einen definierten Zustand setzt, wobei anschließend von den beiden Controllern (2a, 2b) simulierte Eingangssignale auf die Eingänge (4) gegeben und die so bewirkten Ausgangssignale erfasst und dem übergeordneten Rechner zur Verfügung gestellt werden,
wobei die Controller (2a, 2b) und der Rechner über voneinander getrennte unabhängige serielle Busse (6) miteinander kommunizieren,
jeder serielle Bus (6) eine Potenzialtrennung (6a) aufweist und
zur Potenzialtrennung (6a)in den seriellen Bussen (6) Optokoppler verwendet werden,
**dadurch gekennzeichnet,**
**dass** eine Verlustleistungsbegrenzung der Optokoppler vorgesehen ist.

2. Zweikanalige Einheit (1) nach Anspruch 1,
**dadurch gekennzeichnet,**
**dass** zur Verlustleistungsbegrenzung die Optokoppler unterhalb der Nennbetriebsspannung betrieben werden und die Betriebsspannung über Vorwiderstände an den Optokopplern anliegt.

3. Zweikanalige Einheit (1) nach Anspruch 1 oder 2,
**dadurch gekennzeichnet,**
**dass** alle Eingänge (4) auf den Zustand Null gesetzt werden.

4. Zweikanalige Einheit (1) nach Anspruch 3,
**dadurch gekennzeichnet,**
**dass** die Eingänge (4) der stromsensitiven Meldestufen (MS= - MS7) auf Masse gelegt werden.

5. Zweikanalige Einheit (1) nach einem der Ansprüche 1 - 4,
**dadurch gekennzeichnet,**
**dass** eine vom Rechner gesteuerte Schalteinheit vorgesehen ist, welche im Fehlerfall die Versorgungsspannung der angeschlossenen Peripherie abschaltet.

6. Zweikanalige Einheit (1) nach einem der Ansprüche 1 - 5,
**dadurch gekennzeichnet,**
**dass** die auf die Eingänge (4) gegebenen simulierten digitalen Eingangssignale vorgegebene Bitmuster sind.

7. Zweikanalige Einheit (1) mit ausgangsseitigen digitalen Kommandostufen für eine im sicheren Betrieb betriebene sicherungstechnische Einrichtung der Innenanlage
mit zwei von einem übergeordneten sicheren Rechner steuerbaren Controllern (2a, 2b), die jeweils mit einem Eingang (4) und einem Ausgang (3) der paarweise vorhandenen Kommandostufen (KSO-KS7) verbunden sind,
wobei zu deren Prüfung von den Controllern (2a, 2b) jeweils eine Zustandsinvertierung sequentiell auf die Eingänge (4) der Kommandostufen (KSO-KS7) gegeben wird und die so bewirkten Ausgangssignale erfasst und dem Rechner zur Verfügung gestellt werden,
wobei die Controller (2a, 2b) und der Rechner über voneinander getrennte unabhängige serielle Busse (6) miteinander kommunizieren,
jeder serielle Bus (6) eine Potenzialtrennung (6a) aufweist und
zur Potenzialtrennung (6a)in den seriellen Bussen (6) Optokoppler verwendet werden,
**dadurch gekennzeichnet,**
**dass** eine Verlustleistungsbegrenzung der Optokoppler vorgesehen ist.

8. Zweikanalige Einheit (1) nach Anspruch 7,
**dadurch gekennzeichnet,**
**dass** die Zustandsinvertung impulsartig erfolgt.

9. Zweikanalige Einheit (1) nach Anspruch 7 oder 8,
**dadurch gekennzeichnet,**
**dass** zur Verlustleistungsbegrenzung die Optokoppler unterhalb der Nennbetriebsspannung betrieben werden und
die Betriebsspannung über Vorwiderstände an den Optokopplern anliegt.

10. Zweikanalige Einheit (1) nach einem der Ansprüche 7 - 9,
**dadurch gekennzeichnet,**
**dass** eine vom Rechner gesteuerte Schalteinheit (ASS) vorgesehen ist, welche im Fehlerfall die Versorgungsspannung der angeschlossenen Peripherie abschaltet.
